# EUROPEAN PATENT APPLICATION

(11) **EP 1 411 673 A2**
(43) Date of publication of application: **21.04.2004**
(21) Application number: 03252943.0
(22) Date of filing: 12.05.2003
(51) Int. Cl.: H04L 12/28

(54) **Method of providing voice communication services and system for the same**

(30) Priority: 18.10.2002 US 419784 P; 19.12.2002 JP 2002367465
(71) Applicant: MELCO INC., Nagoya-shi, Aichi-ken 460-0011 (JP)
(72) Inventor: Ishidoshiro, Takashi, c/o Melco Inc.,, Minami-ku, Nagaya-shi Aichi-ken 457-8520 (JP)
(74) Representative: Tothill, John Paul

(57) **Abstract**

To expand the call area for wireless IP phones without imposing significant economic costs on IP telephony service providers.

In a voice communication service system JH, a service provider provides voice communication service to a subscriber who has paid a predetermined service charge, using an authorized access point and spare bandwidth available on an authorized broadband connection. Where spare bandwidth on an authorized broadband connection is used by a third party, the authorized access point owner and line lessee of the authorized broadband connection receive a rebate, based on usage of the spare bandwidth, from the service provider.

## Description

The present invention relates to a technique for providing voice communication services among terminals having wireless connections to access points.

In recent years, access points, i.e. wireless LAN repeaters, have come into use as devices for providing a number of computers, situated at different locations, with Internet connectivity via a broadband connection, such as xDSL, CATV, FTTH (Fiber To The Home) or other such fast Internet connectivity services, not only in places in which activities of a specified individual or individuals are largely continuous, such as a home or office (hereinafter termed "private spaces"), but also in places of transitory activity by large numbers of unspecified individuals, such as hotels, airports, shopping malls, parks, train stations, and so on (hereinafter termed "public spaces"). For example, to date there have been proposed services to provide a space (hereinafter termed a "free spot") in which large numbers of unspecified individuals can be provided with freely accessible Internet connectivity over a radio signal range (wireless communication area) transmitted by an access point, by installing a broadband-networked access point in a hotel, airport, shopping mall, park, train station, or other public space.

That is, a broadband connection leased by the administrator of the free spot is accessible, by means of a wireless LAN access point, to personal terminals belonging to users present in the free spot. This provides users with a more convenient connection to the Internet, promoting an incentive to use the public space.

In the field of voice communications, another recent development has been Internet telephony (IP telephony) through the VoIP (Voice over IP) protocol, which enables voice communications to be sent and received over the Internet or other IP (Internet Protocol) network (See PUBLISHED JAPANESE TRANSLATION OF PCT INTERNATIONAL PUBLICATION, No. 2002-524977). With the VoIP protocol, voice data that has been converted into IP packets is sent and received over an IP network to enable voice communication. VoIP has been standardized by the H.323 protocol, which has resulted in improved interconnectivity between the Internet and phone lines, and a gradual changeover away from corporate internal phone systems and dedicated lines is already underway.

Where this type of IP telephony-enabled phone is of the mobile type, enabling it to communicate wirelessly with an access point (such a phone is hereinafter termed a "wireless IP phone"), it becomes possible for voice data produced by a first wireless IP phone to be sent to another wireless IP phone via the access point, phone lines, and the Internet, thereby enabling voice communications similar to those with a cell phone, but using a wireless LAN.

However, a problem with voice communication by wireless IP phones using a wireless LAN is that the call is dropped whenever the wireless IP phone moves outside the wireless call area around the access point, which makes it difficult to have an unbroken conversation while moving about, and this represents a disincentive for consumers to subscribe to IP telephony services. On the other hand, providing access point installations at multiple locations and communication lines connected to these access points so as to enable unbroken conversations to be maintained over a wider area represents a significant economic cost for the IP telephony service provider, and is currently impractical.

Accordingly, it is one object of the present invention to overcome this problem by expanding the call area for wireless IP phones without imposing significant economic costs on IP telephony service providers, by means of the following arrangements.

According to the method of providing voice communication services according to a first aspect of the present invention, a predetermined service charge is collected from a user wishing to receive voice communication service through data switching via the Internet, as compensation for being provided with said voice communication service; and a wireless LAN access point is connected to a provider providing an Internet connection in a predetermined zone, to provide a data switching service via the wireless LAN access point. A portion of said service charge is received in compensation for setting said wireless LAN access point to authorize wireless connection to a wireless terminal of said user for receiving said voice communication service, and said voice communication service is provided to said wireless terminal via said wireless LAN access point.

Accordingly, the method of providing voice communication services of the present invention makes it possible to expand the wireless IP phone voice call area of a wireless LAN access point set to authorize wireless connection with a wireless terminal receiving voice communication service, thereby providing consumers with incentive to subscribe to IP telephony services, without imposing significant equipment costs. The local access point connection provider enabling the wireless terminal to receive the voice communication service collects a portion of said service charge. Accordingly, the local access point connection provider can expect to derive income for the privilege of connecting to the Internet via his or her access point.

In preferred practice, the aforementioned portion of the predetermined service charge collected by the local access point connection provider will be determined with reference to the frequency of use of the wireless LAN access point set to authorize wireless connection, by a wireless terminal receiving said voice communication service.

A system for providing voice communication services according to a second aspect of the present invention makes it possible to collect a predetermined service charge from a user of a terminal wishing to receive voice communication service through data switching via the Internet, as compensation for being provided with said voice communication service, identifying over the Internet terminals having a voice conversation and authorizing said voice communication service between said terminals. Data switching means connects a wireless LAN access point to a provider providing an Internet connection in a predetermined zone, as well as collecting a portion of said service charge as compensation for setting said wireless LAN access point to authorize wireless connection to a wireless terminal wishing to receive said voice communication service, and providing a voice communication data switching service via said wireless LAN access point.

Preferably the voice communication service between the terminals is authorised if at least one (user) of the terminals has paid the service charge.

It is accordingly possible for a voice communication service provider to expand the wireless IP phone voice call area of a wireless LAN access point set to authorize wireless connection with a wireless terminal receiving voice communication service, thereby providing consumers with incentive to subscribe to IP telephony services, without imposing significant equipment costs. The local access point connection provider enabling the wireless terminal to receive voice communication service collects a portion of said service charge. Accordingly, the local access point connection provider can expect to derive compensation for providing the privilege of connecting to the Internet via his or her access point.

According to a third aspect of the present invention, there is provided a method of providing voice communication services via the Internet, the method comprising the following steps:
connecting, in each of a plurality of predetermined zones, a wireless LAN access point to a provider providing an Internet connection in the predetermined zone, to provide a data switching service via the wireless LAN access point in the predetermined zone;
setting one or more of the wireless LAN access points to authorise wireless connection to any wireless terminal wishing to receive the voice communication service;
setting one or more other ones of the wireless LAN access points to authorise wireless connection only to selected authorised wireless terminals; and
providing said voice communication service to wireless terminals via said wireless LAN access points.

According to a fourth aspect of the present invention, there is provided a system for providing voice communication services via the Internet, comprising:
in each of a plurality of predetermined zones, a wireless LAN access point connected to a provider providing an Internet connection in the predetermined zone, for providing a data switching service via the wireless LAN access point in the predetermined zone;
means for setting one or more of the wireless LAN access points to authorise wireless connection to any wireless terminal wishing to receive the voice communication service;
means for setting one or more other of the wireless LAN accesses points to authorise wireless connection only to selected authorised wireless terminals; and
means for providing said voice communication service to wireless terminals via said wireless LAN access points.

According to a fifth aspect of the present invention, there is provided a method of providing a voice communication service via the Internet, the method comprising the following steps:
connecting a wireless LAN access point to a provider providing an Internet connection in a predetermined zone;
determining the bandwidth of the Internet connection used by the provider of the Internet connection for accessing the Internet; and
allowing spare bandwidth of the Internet connection not used by the provider of the Internet connection for accessing the Internet to be used to send voice data to and from said wireless LAN access point to provide a voice communication service to wireless terminals via said wireless LAN access point.

According to a sixth aspect of the present invention, there is provided a system for providing a voice communication service via the Internet, comprising:
a wireless LAN access point connected to a provider providing an Internet connection in a predetermined zone;
means for determining the bandwidth of the Internet connection used by the provider of the Internet connection for accessing the Internet; and
means for allowing spare bandwidth of the Internet connection not used by the provider of the Internet connection for accessing the Internet to be used to send voice data to and from said wireless LAN access point to provide a voice communication service to wireless terminals via said wireless LAN access point.

According to a seventh aspect of the present invention, there is provided a method of providing a voice communication service via the Internet, in a system in which in each of a plurality of predetermined zones a wireless LAN access point is connected to a provider providing an Internet connection in the predetermined zone to provide a data switching service via the wireless LAN access point in the predetermined zone, the method comprising the following steps:
identifying a request for a voice-call from a wireless terminal received via one of the wireless LAN access points;
determining whether the wireless terminal requesting the voice call is an authorised user of the voice communication service, and if it is not, terminating the call;
if the wireless terminal is an authorised user of the voice communication service, determining whether the wireless LAN access point that received the request for a voice call from the wireless terminal is an authorised access point of the voice communication service, and if it is not, terminating the call;
if the wireless LAN access point is an authorised access point of the voice communication service, providing the voice communication service to the wireless terminal via the wireless LAN access point.

According to an eighth aspect of the present invention, there is provided a system for providing a voice communication service via the Internet, comprising:
in each of a plurality of predetermined zones, a wireless LAN access point connected to a provider providing an Internet connection in the predetermined zone for providing a data switching service via the wireless LAN access point in the predetermined zone;
means for identifying a request for a voice-call from a wireless terminal received via one of the wireless LAN access points;
means for determining whether the wireless terminal requesting the voice call is an authorised user of the voice communication service;
means for terminating the call if the wireless terminal is not an authorised user of the voice communication service;
means for determining whether the wireless LAN access point that received the request for a voice call from the wireless terminal is an authorised access point of the voice communication service;
means for terminating the call if the wireless LAN access point is not an authorised access point of the voice communication service; and
means for, if the wireless LAN access point is an authorised access point of the voice communication service, providing the voice communication service to the wireless terminal via the wireless LAN access point.

A number of preferred embodiments of the present invention will now be described by way of example only and with reference to the accompanying drawings, in which:
Fig. 1 illustrates overall arrangement of a voice communication services system JH in an embodiment of the invention.
Fig. 2 illustrates internal architecture of an access point 10x.
Fig. 3 illustrates internal architecture of a wireless IP phone 50.
Fig. 4 illustrates internal architecture of an administration server 63.
Fig. 5 illustrates an exemplary terminal control table 75.
Fig. 6 illustrates the relationship of services provided and corresponding payments in voice communication services system JH.
Fig. 7(A) and Fig. 7(B) illustrate the spare bandwidth in a broadband connection CLa.
Fig. 8 shows flowchart of an administration routine.
Fig. 9 illustrates an exemplary subscriber terminal control table MM.
Fig. 10 illustrates an exemplary usage control table KM.
Fig. 11 shows a flowchart of a point calculation processing routine.

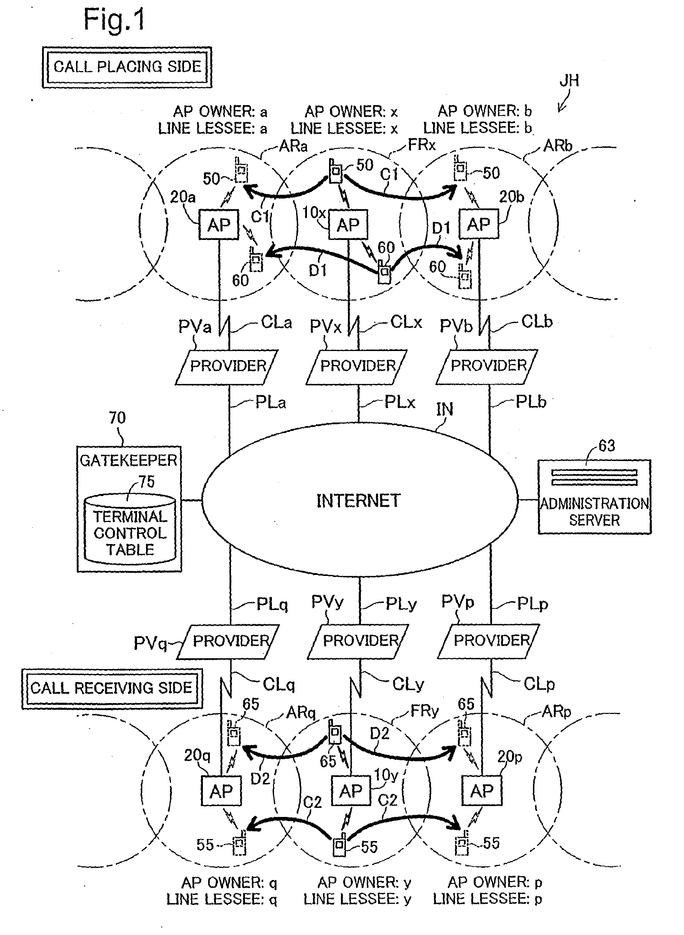

The embodiments of the invention are described hereinbelow through examples, to further elucidate the architecture and effects of the present invention. Fig. 1 is an illustration showing the overall arrangement of a voice communication services system JH in an embodiment of the invention. Voice communication services system JH is a system for maintaining a wide service area for mobile wireless IP phones 50, 55, so as to enable wireless IP phones 50, 55 to have unbroken conversation while moving. In Fig. 1, wireless IP phones 50 and 60 are call-placing terminals, and wireless IP phones 55 and 65 are call-receiving terminals.

In Fig. 1, access point 10x owned by an owner x is situated in a public space, here, a shopping mall. Access point 10y owned by an owner y is situated in a public space, here, a train station, located a considerable distance away from the shopping mall. In Fig. 1, the ranges of radio waves transmitted by access points 10x, 10y are designated as free communication areas FRx, FRy. By installing access points 10x, 10y there are set up wireless LANs having free communication areas FRx, FRy as their wireless communication ranges.

A router housed in access point 10x is connected to a wide area network, i.e. the Internet IN, via a broadband connection CLx leased to a line lessee x (same as owner x), and a dedicated line PLx belonging to the provider PVx who is the lessor to line lessee x. A router housed in access point 10y is connected to the Internet IN, via a broadband connection CLy leased to a line lessee y (same as owner y), and a dedicated line PLy belonging to the provider PVy who is the lessor to line lessee y.

An administration server 63, a gateway (not shown), and a gatekeeper 70 provided with a terminal control table 75 (described later) are connected to the Internet. Gatekeeper 70 performs functions such as registering IP phone terminals (e.g. wireless IP phones 50, 55, 60, 65 etc.), resolving destination addresses, performing zone use requests/permissions and the like. Wireless IP phones 50, 55, 60, 65 perform voice communication by sending and receiving voice data through packet transmission. By means of this arrangement, owners of wireless IP phones 50, 60 in free communication area FRx and owners of wireless IP phones 55, 65 in free communication area FRy can each connect to the Internet IN with their own phone via access points 10x, 10y in order to be able to access various content over the Internet IN, or have a voice conversation between a wireless IP phone 50, 60 and another wireless IP phone 55, 65, designated by gatekeeper 70. That is, free communication areas FRx, FRy are the free spots described earlier.

In residences located close to the shopping mall where access point 10x is situated, there are situated an access point 20a owned by an owner a, and an access point 20b owned by an owner 20b. In residences located close to the station where access point 10y is situated, there are situated an access point 20p owned by an owner p, and an access point 20q owned by an owner 20q. In Fig. 1, ranges for radio waves transmitted by access points 20a, 20b, 20p and 20q are shown as wireless communication areas ARa, ARb, ARp, and ARq, respectively. By installing access points 20a, 20b, 20p and 20q, there are set up wireless LANs having free communication areas ARa, ARb, ARp, and ARq as their wireless communication ranges.

A router housed in access point 10a is connected to the Internet IN via a broadband connection CLa leased to a line lessee a (same as owner a), and a dedicated line PLa belonging to the provider PVa who is the lessor to line lessee a. Routers housed respectively in access points 20b, 20p, and 20q, like access point 20a, are connected to the Internet IN via broadband connections CLb, CLp, CLq leased to line lessees b, p, q (same as owners b, p, q, respectively), and dedicated lines PLb, PLp, PLq belonging to the providers PVb, PVp, PVq who are the lessors to line lessees b, p, q.

In Fig. 1, wireless IP phone 50 and wireless IP phone 60 located in free communication area FRx are respectively owned by Individual A and Individual B, who are persons unrelated to the owner/line lessees a, b, p, q, x, and y mentioned above (hereinafter these persons shall be termed "third parties"); wireless IP phone 55 and wireless IP phone 65 located in free communication area FRy are respectively owned by other third parties, i.e. Individual C and Individual D.

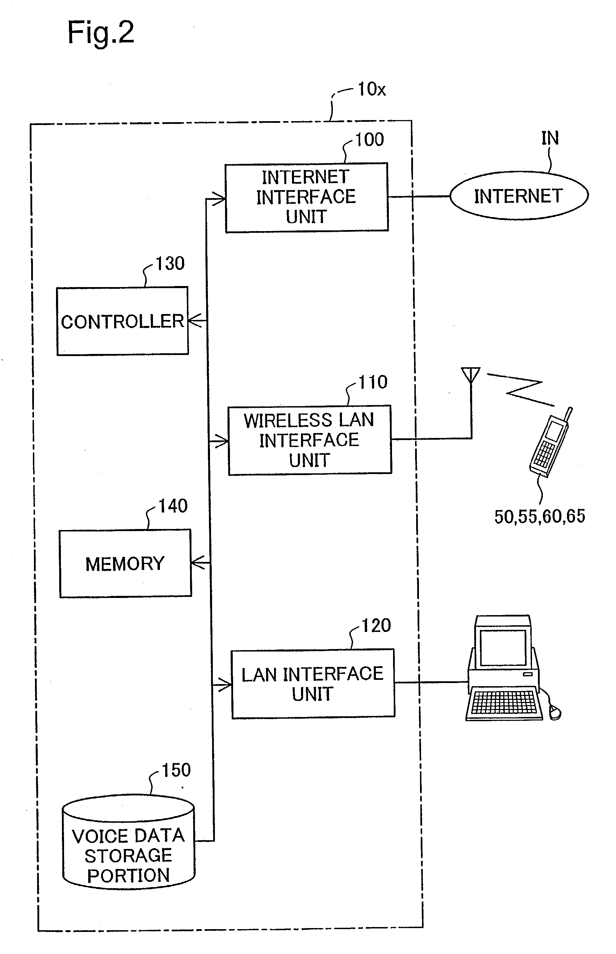

Arrangements for access points 10x, 10y, 20a, 20b, 20p, and 20q are now described. Access points 10x, 10y, 20a, 20b, 20p, and 20q are repeaters in accordance with the IEEE 802.11b standard, and can send and receive data at maximum transmission speed of 11 Mbps using the 2.4 GHz band. Fig. 2 is an illustration showing the internal architecture of an access point 10x. Access point 10x comprises an Internet interface unit 100, a wireless LAN interface unit 110, and a LAN interface unit 120 for I/O interface with the Internet IN, a wireless LAN, and a wired LAN, respectively. Access point 10x further comprises a controller 130 for processing data from these portions and controlling these portions; memory 140 for temporarily storing data used in processes by controller 130; and a voice data storage unit 150 for storing voice data reproducible by clients. Controller 130 has a router function for interconnecting the Internet IN with a wireless LAN or wired LAN. Internal architecture of access points 10y, 20a, 20b, 20p, and 20q is similar to the internal architecture of access point 10x.

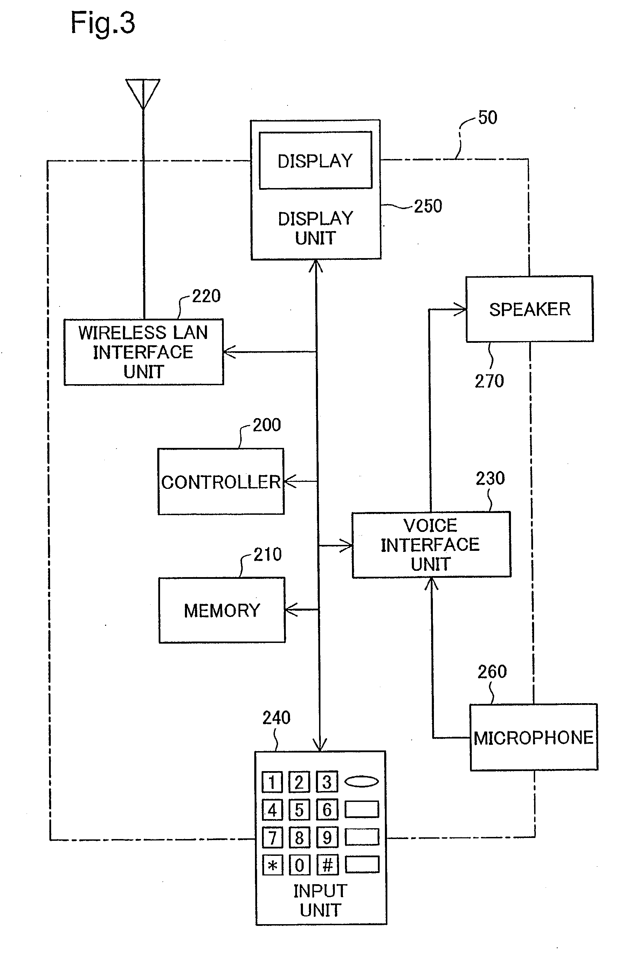

The internal architecture of wireless IP phones 50, 55, 60, 65 is now described. Fig. 3 is an illustration showing the internal architecture of a wireless IP phone 50. Wireless IP phone 50 comprises a controller 200, memory 210, a wireless LAN interface unit 220, a voice interface unit 230, and input unit 240, and a display unit 250. Controller 200 processes data from these portions and controls these portions. Memory 210 temporarily stores data used in processes by controller 200. Wireless LAN interface unit 220 performs I/O interface with a wireless LAN. Voice interface unit 230 is connected to a microphone 260 for voice input and a speaker 270 for voice output, and performs voice input/output. Input unit 240 detects user dial operations and the like. Display unit 250 displays information of various kinds on a liquid crystal display or the like. The internal architecture of wireless IP phones 55, 60, and 65 is similar to the internal architecture of wireless IP phone 50.

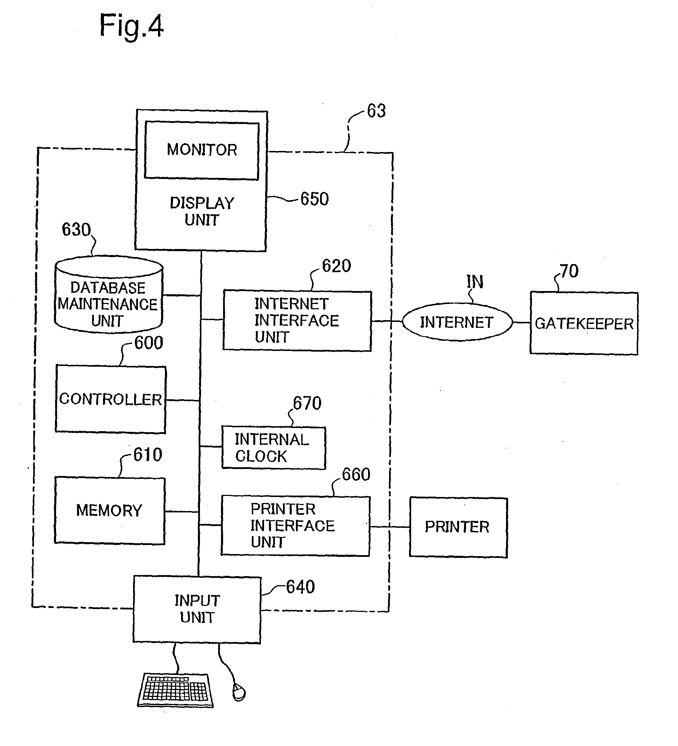

The internal architecture of administration server 63 is now described. Fig. 4 is an illustration showing the internal architecture of administration server 63. Administration server 63 comprises a controller 600, memory 610, an Internet interface unit 620, a database maintenance unit 630, an input unit 640 (e.g. keyboard, mouse etc.), a display unit 650 (e.g. a monitor), a printer interface unit 660 connected to a printer, and an internal clock 670 for clocking current time. Controller 600 processes data from these portions and controls these portions. Memory 610 temporarily stores data used in processes by controller 600. Internet interface unit 620 exchanges information with gatekeeper 70 via the Internet IN. Database maintenance unit 630 accumulates a database of the amount of voice data sent via the Internet from call-placing wireless IP phones 50, 60 to call-receiving wireless IP phones 55, 65, for the individual wireless IP phones 50, 60.

The process of registering wireless IP phones 50, 55, 60, 52 with gatekeeper 70 is now described. First, a wireless IP phone 50, 55, 60, 65 transmits a link setup request to an access point 10x, 10y located in a free spot. The access point 10x, 10y receiving the link setup request transmits a link setup confirmation to the wireless IP phone 50, 55, 60, 65 and assigns it an IP address. Here, each access point 10x, 10y can handle up to 16 global addresses, allowing it to assign up to 15 IP addresses to wireless IP phones, excluding the one assigned to the base station itself. In other words, each access point 10x, 10y can connect up to 15 wireless IP phones. Wireless IP phone 50, 55, 60, 65 then notifies access point 10x, 10y of its terminal ID. Here, terminal ID is an identifier that identifies a particular terminal, and may consist of an IP address, MAC (Media Access Control) address, preassigned phone number, or the like. The access point 10x, 10y having received a terminal ID informs the gatekeeper 70 of the terminal ID and access point ID, an identifier that identifies the particular access point. For convenience in description, access point IDs are shown using the symbols for the access points.

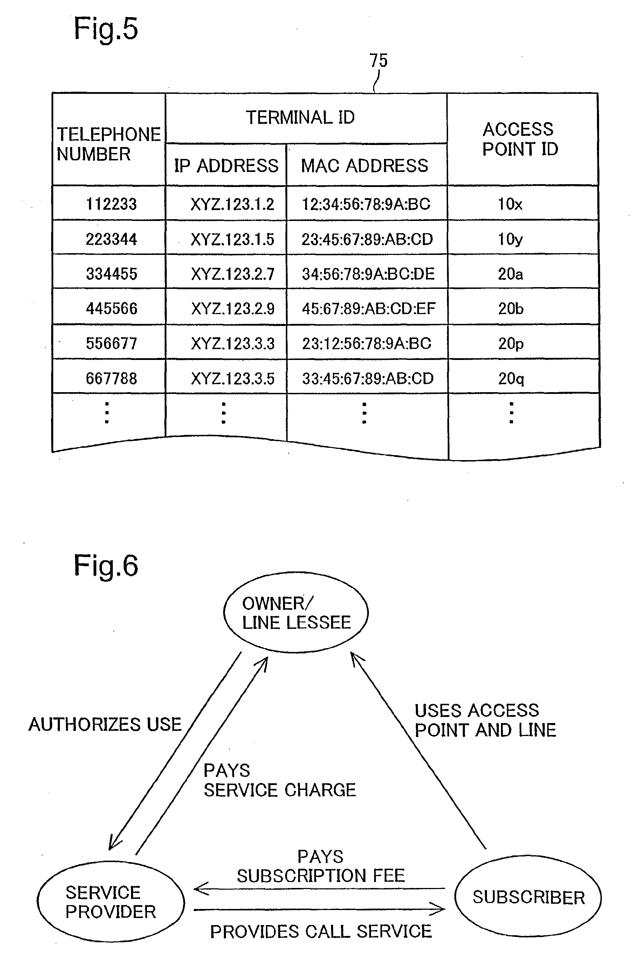

Once gatekeeper 70 receives a terminal ID and access point ID, it registers these in a terminal control table 75 provided to gatekeeper 70. Fig. 5 is an illustration showing an exemplary terminal control table 75. In terminal control table 75 are registered associated terminal IDs (phone numbers), MAC addresses, and access point IDs. For example, if wireless IP phone 50 moves from the free communication area FRx of access point 10x to the wireless communication area of a different access point, the IP address and access point ID in terminal control table 75 will be updated. The registration process is performed similarly for wireless IP phones 55, 60, and 65.

Voice communication occurring when a call is placed from a wireless IP phone 50, 60 located in free communication area FRx to a wireless IP phone 55, 65 located in free communication area FRy is now described. If the phone number of wireless IP phone 55 or 65 is input to the input unit 240 of wireless IP phone 50 or 60 to request connection, the wireless IP phone 50, 60 transmits the phone number to the gatekeeper 70 via access point 10x. Gatekeeper 70 looks up in the terminal control table 75, identifies the IP address of the wireless IP phone 55, 65 corresponding to the phone number, and transmits the identified IP address to wireless IP phone 50, 60 via access point 10x. On the basis of the received IP address, wireless IP phone 50, 60 establishes a communications link with wireless IP phone 55, 56 via access point 10x.

Once a communications link has been established between wireless IP phone 50 or 60 and wireless IP phone 55 or 65, wireless IP phone 50, 60 transmits a call signal to wireless IP phone 55, 65. The wireless IP phone 55, 65 receiving the call signal transmits a call received signal to wireless IP phone 50, 60. Wireless IP phone 55, 65 then goes on-hook, whereby wireless IP phone 55, 65 transmits an answer signal to wireless IP phone 50, 60. When wireless IP phone 50, 60 receives the answer signal, a voice communications link is established between wireless IP phone 50, 60 and wireless IP phone 55, 65. Voice or data communication proceeds subsequently until either wireless IP phone 50, 60 or wireless IP phone 55, 56 goes off-hook.

The characteristic workings of voice communication services system JH are now described. Fig. 6 is an illustration of relationship of services provided and corresponding payments in voice communication services system JH. The party providing voice communication services through system JH (hereinafter referred as the service provider) pays service charges to the owners/lessees a, b, p, q, and receives from owners/lessees a, b, p, q authorization for use of access points 20a, 20b, 20p, 20q by third parties and for use of broadband connections CLa, CLb, CLp, CLq by third parties. Access points 20a, 20b, 20p, 20q having received authorization in this manner are hereinbelow referred to collectively as authorized access points; broadband connections CLa, CLb, CLp, CLq having received authorization in this manner are hereinbelow referred to collectively as authorized broadband connections.

The service provider designates wireless IP phone owners who have paid a predetermined service charge as subscribers to the voice communication services provided by system JH (hereinafter these individuals shall be referred to as subscribers), and authorizes subscribers to connect to the Internet IN via authorized access points and authorized broadband connections. In Fig. 1, Individuals A and C owning wireless IP phones 50 and 55 are subscribers, whereas Individuals B and D owning wireless IP phones 60 and 65 are not subscribers to the voice communication services provided by system JH (hereinafter these individuals shall be referred to as non-subscribers). Thus, subscribing Individuals A and C are able to carry out voice communication using wireless IP phones 50, 55 in any of the wireless communication areas ARa, ARb, ARp, ARq through legitimate use of authorized access points and authorized broadband connections. In the present embodiment, the service charge paid by the service provider to owners/lessees can be an arbitrarily determined amount based on total service charges received by the service provider, minus expenses entailed in providing service (equipment and personnel costs etc.) and a profit margin for the service provider.

Under such an arrangement, in the event that wireless IP phone 50 of Individual A or wireless IP phone 60 of Individual B is present in free communication area FRx as shown by the solid lines in Fig. 1, Individual A using his own wireless IP phone 50 will be able to have free voice communication with wireless IP phone 55 of Individual C present in free communication area FRy, and Individual B using his own wireless IP phone 60 will be able to have free voice communication with wireless IP phone 65 of Individual D present in free communication area FRy. This is because free communication areas FRx, FRy are free spots providing open access to anyone from access point 10x to the Internet IN via broadband connection CLx.

In the subsequent event that Individual B's wireless IP phone 60 exits free communication area FRx and enters wireless communication area ARa or wireless communication area ARb, as shown by arrows D1 in Fig. 1, Individual B will not be able to carry on unbroken voice communication with Individual D. Non-subscriber Individual B is not authorized to use access points 20a, 20b or broadband connections CLa, CLb, so unauthorized use would represent infringement of property rights, e.g. ownership of access points 20a, 20b by owners a, b license of broadband connections CLa, CLb by line lessees a, b. In the event that Individual D's wireless IP phone 65 exits free communication area FRy and enters wireless communication area ARp or wireless communication area ARq (see arrows D2 in Fig. 1), since Individual D is a non-subscriber, unbroken voice communication between Individual B and Individual D cannot be carried on, for the same reason as with movement of Individual B described above.

On the other hand, in the event that Individual A's wireless IP phone 50 exits free communication area FRx and enters wireless communication area ARa or wireless communication area ARb, as shown by arrows C1 in Fig. 1, Individuals A and C will be able to carry on unbroken voice communication. This is because subscriber Individual A is authorized by the service provider (who is in turn authorized by owners/lessees a, b) to use access points 20a, 20b or broadband connections CLa, CLb. In the event that Individual C's wireless IP phone 55 exits free communication area FRy and enters wireless communication area ARp or wireless communication area ARq (see arrows C2 in Fig. 1), since Individual C is a subscriber, unbroken voice communication between Individual A and Individual C can be carried on, for the same reason as with movement of Individual A described above.

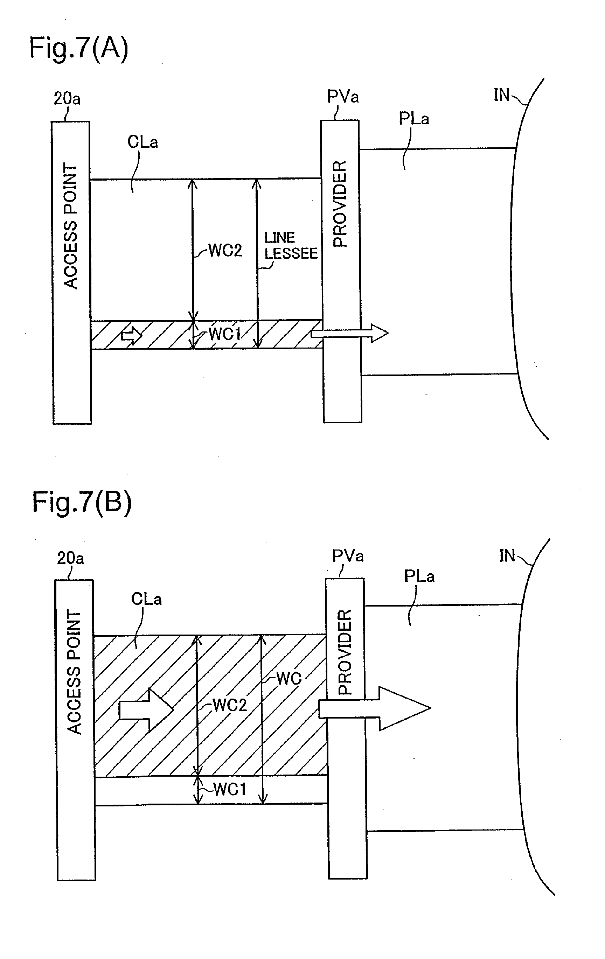

Access to the Internet IN via authorized broadband connections is made possible through spare bandwidth on a broadband connection. Fig. 7(A) and 7(B) are illustrations depicting spare bandwidth in a broadband connection CLa. Broadband connection CLa is a network connection having bandwidth WC (i.e., the amount of data that can be transmitted to a computer in a given time interval) of 200 Kbps or above. In the case of ADSL and CATV, for example, bandwidth WC is on the order of 300 Kbps to several Mbps; and in the case of FTTH is a maximum of 100 Mbps. Line lessee a's lease entitles him to use the entire bandwidth WC of the line from provider PLa.

In Fig. 7(A) and 7(B), that portion of bandwidth WC available on broadband connection CLa that represents the average bandwidth actually used by line lessee a for access to the Internet IN is labeled as actually used bandwidth WC1, and spare bandwidth over and above the actually used bandwidth WC1 is labeled as spare bandwidth WC2. On broadband connection CLa which is individually leased by line lessee a, in many cases, actually used bandwidth WC1 represents a relatively small proportion of available bandwidth WC, whereas spare bandwidth WC2 represents a larger proportion than actually used bandwidth WC1. In light of the extent of spare bandwidth WC2, voice communication services system JH has been designed to send voice data produced by subscriber's wireless IP phone 50 on spare bandwidth WC2 available on broadband connection CLa, and transmit the voice data to another wireless IP phone 60 via the provider PVa's dedicated line PLa and the Internet IN.

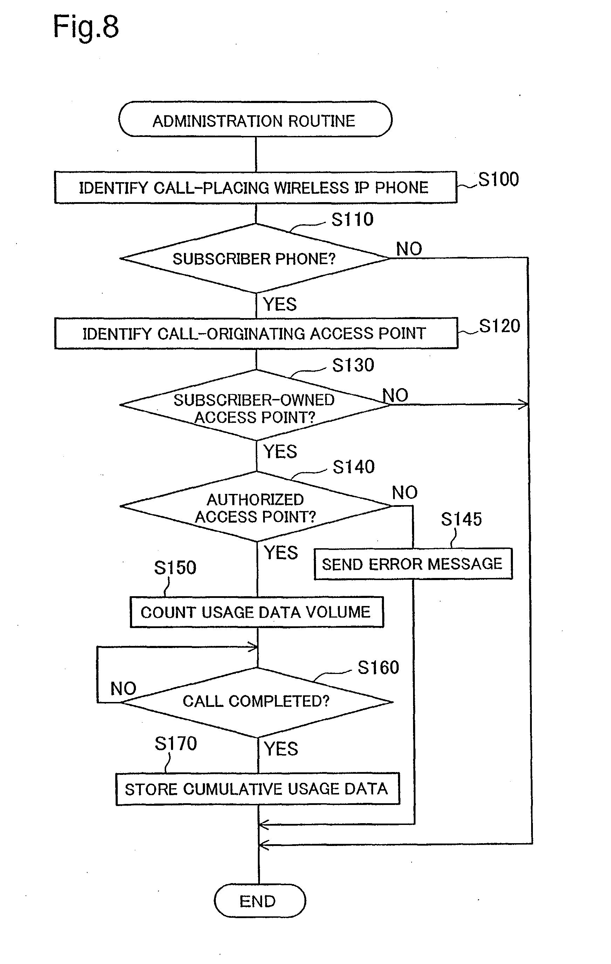

The substance of such a voice communication services system JH is realized through various processes executed by the administration server 63, which monitors in real time the status of communications links among wireless IP phones in gatekeeper 70. Administration server 63 monitors gatekeeper 70, and upon determining that a communications link has been established between wireless IP phones, executes the administration routine shown in Fig. 8. The substance of the administration routine shall be described below, taking the example of a communications link established between a wireless IP phone 50 (call placing side) in wireless communication area ARa and a wireless IP phone 55 (call receiving side) in wireless communication area ARp.

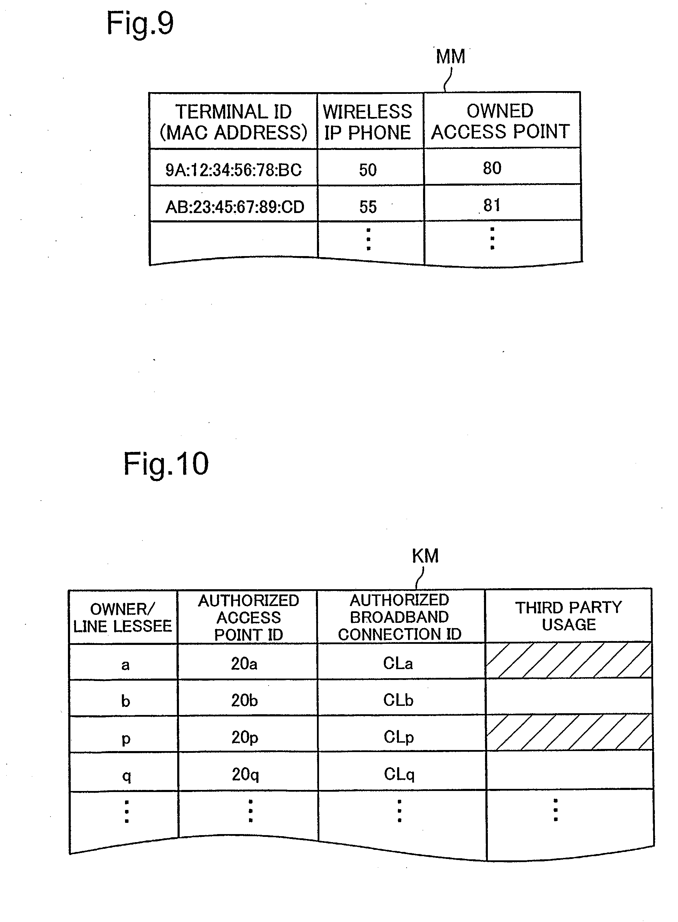

When the routine starts, first, a process to identify the call placing wireless IP phone and determine whether the call placing wireless IP phone is a subscriber is performed (Step S100, Step S110). This process is accomplished by inputting via the Internet IN the terminal ID of the call placing wireless IP phone identified by gatekeeper 70, and determining whether the wireless IP phone having this terminal ID is registered in a subscriber terminal control table MM stored in the database maintenance unit 630. An exemplary subscriber terminal control table MM is shown in Fig. 9. As indicated in Fig. 9, subscriber terminal control table MM describes terminal ID/wireless IP phone name relationships, and IDs for access points belonging to the owners of wireless IP phones. In the above example, call placing wireless IP phone 50 is registered in the subscriber terminal control table MM, and is therefore determined to be a subscriber.

In the event of a determination that the call placing wireless IP phone is not a subscriber, the routine is terminated based on ineligibility to receive the service. If, on the other hand, the call placing wireless IP phone is determined to be a subscriber, a process to identify the access point currently being accessed by the call placing wireless IP phone (hereinafter referred to as the call originating access point) and determine whether the call originating access point is owned by the subscriber is performed (Step S120, Step S130). This process is accomplished by inputting via the Internet IN the access point ID corresponding to the terminal ID identified by gatekeeper 70, and determining from subscriber terminal control table MM whether this access point ID is associated with the wireless IP phone identified in Step S100. As shown in Fig. 9, in the above example, access point 20a, which has been accessed by wireless IP phone 50 belonging to Individual A, is not the access point 80 owned by Individual A per se, so the determination is made that the call originating access point is not owned by the subscriber.

In the event of a determination that the call originating access point is owned by the subscriber, the call is considered as authorized based on "self authorization" to access the access point owned by the caller with the wireless IP phone assigned to the caller, and the routine is terminated. If on the other hand, it is determined that the call originating access point is not owned by the subscriber, the call is considered to be using a third party access point and third party broadband connection, and a determination is made as to the validity of such a call. Specifically, it is determined whether the call originating access point identified in Step S120 is authorised, by looking up in a usage control table KM stored in the database maintenance unit 630 (Step S140).

An exemplary usage control table KM is shown in Fig. 10. As shown in Fig. 10, usage control table KM describes IDs for each authorized access point, associated with IDs of authorized broadband connections to authorized access points and with user/line lessees granting the relevant authorization. In the present embodiment, for convenience in description, authorized broadband connection IDs are shown using the symbols assigned herein to the broadband connections. Usage control table KM also contains a entry field for "third party usage" for each authorized broadband connection. This "third party usage" item shows total volume of voice data transmitted over a broadband connection, in the event that an authorized broadband connection is used by a wireless IP phone belonging to a third party who is not the line lessee. "Third party usage" is cumulatively stored each time that an authorized broadband connection is used by a third party. As shown in Fig. 10, in the above example, access point 20a, which has been accessed by wireless IP phone 50 belonging to Individual A, is determined to be an authorized access point authorized by owner a.

In the process of Step S140, in the event of a determination that the call originating access point is not an authorized access point, the situation is considered to be one of unauthorized use of another access point and broadband connection, and after sending in voice data format an error message to the effect that, "the call placing phone is outside the service area" (Step S145), the routine is terminated. If, on the other hand, it is determined that the call originating access point is an authorized access point, the situation is considered to be one of use of an authorized access point and use of spare bandwidth on an authorized broadband connection, and a process to count the volume of voice data sent and received over the broadband connection connected to the authorized access point is performed (Step S150). This process continues until the wireless IP phone call is completed (Step S160). When the call is completed, a process to cumulatively store the total volume of data counted for the broadband connection in the "third party usage" field in usage control table KM (Step S170) is carried out, and the routine is terminated. As shown in Fig. 10, in the above example, voice data transmitted between wireless IP phone 50 located in wireless communication area ARa and wireless IP phone 55 located in wireless communication area ARp is sent and received using spare bandwidth on the broadband connection CLa connected to access point 20a and spare bandwidth on the broadband connection Clp connected to access point 20p, and thus the total volume of sent and received voice data is added to the fields shown diagonally hatched in Fig. 10.

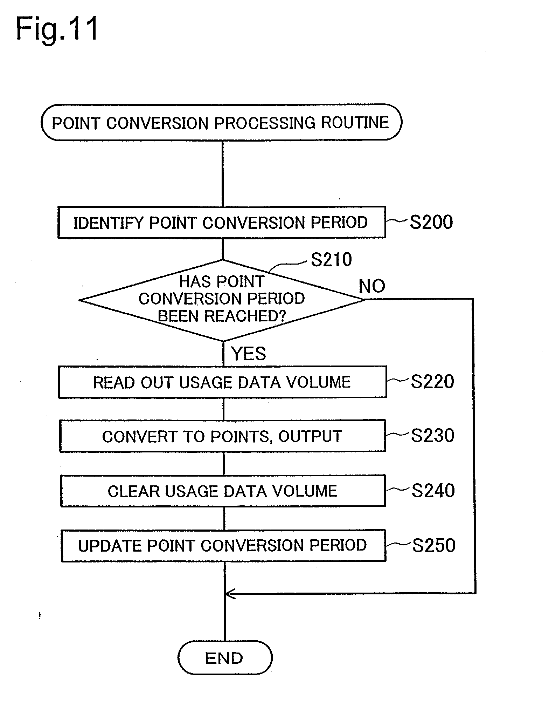

Administration server 63 executes a point conversion processing routine, shown in Fig. 11, in addition to the administration routine described above. This routine is performed at periodic intervals, once data representing a point conversion period for each broadband connection has been input (by operation of input unit 640), and this data stored in the database maintenance unit 630.

When the routine starts up, the server first refers to the internal clock 670 and the database maintenance unit 630, and respectively identifies the current time, and the point conversion period for each authorized broadband connection (Step S200). A process to determine whether the point conversion period has been reached is then performed (Step S210). In the event of a determination that the point conversion period has not been reached, the routine terminates. In the event of a determination that the point conversion period has been reached, the server looks up in the usage control table KM and reads out usage data stored in the for "third party usage" field for each authorized broadband connection (Step S220), and performs a process to convert this total amount to a point count and output the converted point count to monitor 650 or a printer (Step S230). After outputting the point count, the usage data stored in the for "third party usage" field for each authorized broadband connection is cleared (Step S240), and a subsequent point conversion period is established and updated in memory in the database maintenance unit 630 (Step 250), whereupon the routine terminates. Subsequently, a customer rebate based on the point score is paid by way of the aforementioned service fee to the authorized access point owner and authorized broadband connection line lessee (in the present embodiment, the relevant party among line lessees a, b, p, and q).

According to the voice communication service system JH of the embodiment described hereinabove, voice data transmitted to an authorized access point from the wireless IP phone 50 of a subscriber who has paid a predetermined service charge is sent to the Internet IN using spare bandwidth on an authorized broadband connection linked to the authorized access point. Accordingly, the service provider can expand the call area for wireless IP phones without assuming significant economic costs, thus increasing the incentive to subscribe to IP telephony services. Additionally, with voice communication service system JH, where spare bandwidth on an authorized broadband connection is used by a third party, a rebate to be paid to the line lessee of the authorized broadband connection whose spare bandwidth is used can be calculated on the basis of usage of the spare bandwidth. By having the service provide pay a rebate calculated in this manner to the line lessee of the authorized broadband connection, the line lessee can derive income from unutilized capacity on his leased broadband connection.

While the invention has been shown and described hereinabove with reference to a preferred embodiment, it is not limited thereto and may be reduced to practice in various modes without departing from the scope thereof which is defined by the appended claims. For example, the [network] to which access points are connected is not limited to the Internet IN, and could be some other wide area network instead.

## Claims

1. A method of providing voice communication services via the Internet, the method comprising the following steps:
collecting a predetermined service charge from a user wishing to receive voice communication service through data switching via the Internet, as compensation for being provided with said voice communication service;
connecting a wireless LAN access point to a provider providing an Internet connection in a predetermined zone, to provide a data switching service via the wireless LAN access point;
collecting a portion of said service charge in compensation for setting said wireless LAN access point to authorize wireless connection to a wireless terminal of said user for receiving said voice communication service; and
providing said voice communication service to said wireless terminal via said wireless LAN access point.

2. A method of providing voice communication services in accordance with claim 1, wherein said portion of said service charge is determined with reference to the frequency of use of the wireless LAN access point set to authorize wireless connection by wireless terminals receiving said voice communication service.

3. A system for providing voice communication services via the Internet, the system comprising:
terminal identifying means for collecting a predetermined service charge from a user of a terminal wishing to receive voice communication service through data switching via the Internet, identifying over the Internet terminals having a voice conversation and authorizing said voice communication service between said terminals; and
data switching means for connecting a wireless LAN access point to a provider providing an Internet connection in a predetermined zone, as well as receiving a portion of said service charge in compensation for setting said wireless LAN access point to authorize wireless connection to a wireless terminal wishing to receive said voice communication service, and providing a voice communication data switching service via said wireless LAN access point.

4. A method of providing voice communication services via the Internet, the method comprising the following steps:
connecting, in each of a plurality of predetermined zones, a wireless LAN access point to a provider providing an Internet connection in the predetermined zone, to provide a data switching service via the wireless LAN access point in the predetermined zone;
setting one or more of the wireless LAN access points to authorise wireless connection to any wireless terminal wishing to receive the voice communication service;
setting one or more other ones of the wireless LAN access points to authorise wireless connection only to selected authorised wireless terminals; and
providing said voice communication service to wireless terminals via said wireless LAN access points.

5. A method of providing a voice communication service via the Internet, the method comprising the following steps:
connecting a wireless LAN access point to a provider providing an Internet connection in a predetermined zone;
determining the bandwidth of the Internet connection used by the provider of the Internet connection for accessing the Internet; and
allowing spare bandwidth of the Internet connection not used by the provider of the Internet connection for accessing the Internet to be used to send voice data to and from said wireless LAN access point to provide a voice communication service to wireless terminals via said wireless LAN access point.

6. A method of providing a voice communication service via the Internet, in a system in which in each of a plurality of predetermined zones a wireless LAN access point is connected to a provider providing an Internet connection in the predetermined zone to provide a data switching service via the wireless LAN access point in the predetermined zone, the method comprising the following steps:
identifying a request for a voice-call from a wireless terminal received via one of the wireless LAN access points;
determining whether the wireless terminal requesting the voice call is an authorised user of the voice communication service, and if it is not, terminating the call;
if the wireless terminal is an authorised user of the voice communication service, determining whether the wireless LAN access point that received the request for a voice call from the wireless terminal is an authorised access point of the voice communication service, and if it is not, terminating the call;
if the wireless LAN access point is an authorised access point of the voice communication service, providing the voice communication service to the wireless terminal via the wireless LAN access point.

7. A system for providing voice communication services via the Internet, comprising:
in each of a plurality of predetermined zones, a wireless LAN access point connected to a provider providing an Internet connection in the predetermined zone, for providing a data switching service via the wireless LAN access point in the predetermined zone;
means for setting one or more of the wireless LAN access points to authorise wireless connection to any wireless terminal wishing to receive the voice communication service;
means for setting one or more other of the wireless LAN accesses points to authorise wireless connection only to selected authorised wireless terminals; and
means for providing said voice communication service to wireless terminals via said wireless LAN access points.

8. A system for providing a voice communication service via the Internet, comprising:
a wireless LAN access point connected to a provider providing an Internet connection in a predetermined zone;
means for determining the bandwidth of the Internet connection used by the provider of the Internet connection for accessing the Internet; and
means for allowing spare bandwidth of the Internet connection not used by the provider of the Internet connection for accessing the Internet to be used to send voice data to and from said wireless LAN access point to provide a voice communication service to wireless terminals via said wireless LAN access point.

9. A system for providing a voice communication service via the Internet, comprising:
in each of a plurality of predetermined zones, a wireless LAN access point connected to a provider providing an Internet connection in the predetermined zone for providing a data switching service via the wireless LAN access point in the predetermined zone;
means for identifying a request for a voice-call from a wireless terminal received via one of the wireless LAN access points;
means for determining whether the wireless terminal requesting the voice call is an authorised user of the voice communication service;
means for terminating the call if the wireless terminal is not an authorised user of the voice communication service;
means for determining whether the wireless LAN access point that received the request for a voice call from the wireless terminal is an authorised access point of the voice communication service;
means for terminating the call if the wireless LAN access point is not an authorised access point of the voice communication service; and
means for, if the wireless LAN access point is an authorised access point of the voice communication service, providing the voice communication service to the wireless terminal via the wireless LAN access point.
